# EUROPÄISCHE PATENTSCHRIFT

(11) **EP 2 640 761 B1**
(45) Veröffentlichungstag und Bekanntmachung des Hinweises auf die Patenterteilung: **03.09.2014**
(21) Anmeldenummer: 11784991.9
(22) Anmeldetag: 15.11.2011
(51) Int. Cl.: C08G 18/10, C08G 18/66, C08J 9/00

(54) **DIMENSIONSSTABILE POLYURETHANFORMKÖRPER MIT GERINGER DICHTE**
DIMENSIONALLY STABLE POLYURETHANE MOLDED BODIES HAVING LOW DENSITY
CORPS MOULÉS EN POLYURÉTHANE À DIMENSIONS STABLES PRÉSENTANT UNE FAIBLE DENSITÉ

(30) Priorität: 16.11.2010 WO PCT/CN2010/078781
(43) Veröffentlichungstag der Anmeldung: 25.09.2013
(73) Patentinhaber: BASF SE, 67056 Ludwigshafen (DE)
(72) Erfinder: KAMM, Andre, 49163 Bohmte (DE); LIANG, Dong, GuangZhou city 511400 (CN); TANG, ZhiZhong, Panyu Guangzhou 511400 (CN); HU, LiHua, Panyu Guangzhou 511400 (CN)
(86) Internationale Anmeldenummer: PCT/EP2011/070088
(87) Internationale Veröffentlichungsnummer: WO 2012/065962

(56) Entgegenhaltungen:
- EP-A1- 1 790 675
- EP-A2- 0 795 572

## Beschreibung

Die vorliegende Erfindung betrifft ein Verfahren zur Herstellung von Polyurethanschaumstoffformkörper mit einer Formteildichte von maximal 450 g/L bei dem man (a) organische Polyisocyanate mit (b) Polyesterole, (c) Treibmitteln, (d) zellöffnenden Additiven, Ausgewählt aus der Gruppe, bestehend aus Homo- oder Copolymeren, auf Basis von Ethylhexylacrylat, Polybutadien, Polyisobuten und Diorganosilikonen oder Mischungen aus zwei oder mehreren dieser Additive (e) Silikonbasierte Zellstabilisatoren und gegebenenfalls (f) Kettenverlängerungsmitteln und/oder Vernetzungsmitteln, (g) Katalysatoren und (h) sonstigen Hilfsmitteln und/oder Zusatzstoffen, zu einer Reaktionsmischung vermischt, in eine Form gibt und zu einem Polyurethanschaumstoffformkörper ausreagieren lässt. Weiter betrifft die vorliegende Erfindung Polyurethanformkörper, erhältlich nach einem solchen Verfahren und die Verwendung dieser Formkörper als Schuhsohle, Lenkrad, Sitz oder Armlehne.

Innerhalb der letzten Jahre ist ein Trend zu leichteren Schuhsohlen festzustellen. Die Reduktion der Dichte bei Polyürethanschuhsohlen führt allerdings zu Problemen mit der Dimensionsstabilität der Formkörper. Dies bedeutet, dass die gesamte Sohle kleiner wird oder aber die Oberflächengüte der Schuhsohlen durch geschrumpfte Stellen leidet.

Um die Dimensionsstabilität der Polyurethane zu verbessern werden in der Literatur verschiedene Möglichkeiten diskutiert. Beispielsweise beschreibt DE 2402734 die Herstellung von Polyurethanintegralschäumen bei denen ein Prepolymer auf Polyesterolbasis mit einer Polyolkomponente auf Basis von Polyetherolen vermischt wird. Nachteilig bei so hergestellten Polyurethansystemen ist, dass durch die Unverträglichkeit der Polyester- und Polyetherole die mechanischen Eigenschaften leiden und ein Schrumpfen der Polyurethanintegralschaumstoffe nicht verhindert werden kann.

Eine weitere in der Literatur beschriebene Möglichkeit ist der Einsatz von Graft- oder Polymerpolyolen. So beschreibt EP 1 042 384 die Herstellung von niederdichten, dimensionstabilien Schuhsohlen auf Polyetherol Basis durch den Einsatz großen Mengen an Polyether-Graftpolyolen. Nachteilig an diesem Verfahren sind die deutlich schlechteren mechanischen Eigenschaften im Vergleich zu Schuhsohlen auf Polyesterol Basis. Ferner wirkt sich der hohe Anteil an Polymerpolyetherolen Nachteilig auf die Viskosität der Polyolkomponente aus.

In EP 1 790 675 und EP 1 756 187 wird der Einsatz von Polymerpolyolen auf Basis von Polyesterolen in einen Polyesterpolyurethan beschrieben. Durch die höhere Viskosität der großen Mengen an Polyester-Polymerpolyol sind diese Systeme deutlich schwieriger zu verarbeiten. Ferner offenbaren EP 1 790 675 und EP 1 756 187 den Einsatz von Polymerpolyolen auf Polyetherolbasis in Polyesterolpolyurethansystem. Die Schriften zeigen im Vergleichsbeispiel, dass er Einsatz von Polymerpolyetherolen zu einem Integralschaumstoff mit unzureichender Oberfläche und grober Zellstruktur führt.

Das Dokument EP 0 795 572 A2 offenbart ein Verfahren zur Herstellung von Polyurethanschaumstoffen und deren Verwendung als Schuhsohlen. In den Beispielen 1-4 von EP 0 795 572 A2 werden Zusammensetzungen offenbart, die ein PolyisocyanatPrepolymer, ein Polyesterpolyol, ein Treibmittel, einen Kettenverlängerer, einen Katalysator und als Additiv Dimethylpolysiloxane enthalten.

Aufgabe der vorliegenden Erfindung war es ein Verfahren zur Herstellung von Polyurethanschaumstoffformkörpern mit einer Dichte von kleiner 450 g/L zu liefern, insbesondere einem Polyurethanintegralschaumstoff, der bei oder unmittelbar nach dessen Herstellung nicht schrumpft und eine hervorragende Oberflächenbeschaffenheit aufweist.

Diese Aufgabe wird gelöst durch ein Verfahren zur Herstellung von Polyurethanschaumstoffformkörper mit einer Formteildichte von maximal 450 g/L bei dem man (a) organische Polyisocyanate mit (b) Polyesterole, (c) Treibmitteln, (d) zellöffenden Additiven, Ausgewählt aus der Gruppe, bestehend aus Homo oder Copolymeren, auf Basis von Ethylhexylacrylat, , Polybutadien, Polyisobuten und Diorganosilikonen oder Mischungen aus zwei oder mehreren dieser Additive (e) Silikonbasierte Zellstabilisatoren und gegebenenfalls (f) Kettenverlängerungsmitteln und/oder Vernetzungsmitteln, (g) Katalysatoren und (h) sonstigen Hilfsmitteln und/oder Zusatzstoffen, zu einer Reaktionsmischung vermischt, in eine Form gibt und zu einem Polyurethanschaumstoffformkörper ausreagieren lässt.

Als Polyurethanschaumstoffformkörper werden im Rahmen der Erfindung Polyurethanschaumstoffe bezeichnet, die in einer Form hergestellt werden. Als Polyurethanintegralschaumstoffe im Sinn der Erfindung werden Polyurethan-Schaumstoffe nach DIN 7726 mit einer Randzone, die bedingt durch den Formgebungsprozess eine höhere Dichte als der Kern aufweist, verstanden. Die über den Kern und die Randzone gemittelte Gesamtrohdichte liegt dabei vorzugsweise über 80 g/L bis 450 g/L bevorzugt von 150 g/L bis 400 g/L, besonders bevorzugt 180 g/L bis 350 g/L und insbesondere 200 bis 300 g/L. Da auch Polyurethanintegralschaumstoffe in einer Form hergestellt werden, umfassen Polyurethanschaumstoffformkörper auch Polyurethanintegralschaumstoffe.

Die zur Herstellung der erfindungsgemäßen Polyurethanschaumstoffformkörper verwendeten organischen und/oder modifizierten Polyisocyanate (a) umfassen die aus dem Stand der Technik bekannten aliphatischen, cycloaliphatischen und aromatischen zwei- oder mehrwertigen Isocyanate (Bestandteil a-1) sowie beliebige Mischungen daraus. Beispiele sind monomeres Metandiphenyldiisocyanat (MMDI), wie 4,4'-Metandiphenyldiisocyanat, 2,4'-Metandiphenyldiisocyanat, die Mischungen aus monomeren Metandiphenyldiisocyanaten und höherkernigen Homologen des Metandiphenyldiisocyanats (Polymer-MDI), Tetramethylendiisocyanat, Hexamethylendiisocy-anat (HDI), Isophorondiisocyanat (IPDI), 2,4- oder 2,6-Toluylendiisocyanat (TDI) oder Mischungen der genannten Isocyanate.

Bevorzugt wird 4,4'-MDI verwendet. Das bevorzugt verwendete 4,4'-MDI kann 0 bis 20 Gew.-% 2,4' MDI und geringe Mengen, bis etwa 10 Gew.-%, allophanat-oder uretoniminmodifizierte Polyisocyanate enthalten. Es können auch geringe Mengen Polyphenylenpolymethylenpolyisocyanat (Polymer-MDI) eingesetzt werden. Die Gesamtmenge dieser hochfunktionellen Polyisocyanate sollte 5 Gew.-% des eingesetzten Isocyanats nicht überschreiten.

Die Polyisocyanatkomponente (a) wird bevorzugt in Form von Polyisocyanatprepolymeren eingesetzt. Diese Polyisocyanatprepolymere sind erhältlich, indem vorstehend beschriebene Polyisocyanate (a-1), beispielsweise bei Temperaturen von 30 bis 100 °C, bevorzugt bei etwa 80 °C, mit Polyolen (a-2), zum Prepolymer umgesetzt werden.

Polyole (a-2) sind dem Fachmann bekannt und beispielsweise beschrieben im "Kunststoffhandbuch, Band 7, Polyurethane", Carl Hanser Verlag, 3. Auflage 1993, Kapitel 3.1. Vorzugsweise werden dabei als Polyole (a-2) die unter b) beschriebenen Polyesterole eingesetzt.

Gegebenenfalls werden den genannten Polyesterolen bei der Herstellung der Isocyanatprepolymere übliche Kettenverlängerer oder Vernetzungsmittel zugegeben. Solche Substanzen sind im Folgenden unter f) beschrieben.

Als Polyesterole b) werden Polyesterole mit mindestens zwei gegen Isocyanatgruppen reaktiven Wasserstoffatomen eingesetzt. Vorzugsweise weisen Polyesterole b) ein zahlenmittleres Molekulargewicht von größer 450 g/mol, besonders bevorzugt von größer 500 bis kleiner 12.000 g/mol und insbesondere von 600 bis 8.000 g/mol auf.

Polyesterpolyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen und mehrwertigen Alkoholen, vorzugsweise Diolen, mit 2 bis 12 Kohlenstoffatomen, vorzugsweise 2 bis 6 Kohlenstoffatomen, hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure in Mengenverhältnissen von beispielsweise 20 bis 35 : 35 bis 50 : 20 bis 32 Gew.-Teilen, und insbesondere Adipinsäure. Beispiele für zwei und mehrwertige Alkohole, insbesondere Diole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol und 1,6-Hexandiol. Eingesetzt werden können ferner Polyesterpolyole aus Lactonen, z.B. ε-caprolacton oder Hydroxycarbonsäuren, z.B. ω-Hydroxycapronsäure.

Zur Herstellung der Polyesterpolyole können die organischen, z.B. aromatischen und vorzugsweise aliphatischen Polycarbonsäuren und/oder -derivate und mehrwertigen Alkohole katalysatorfrei oder vorzugsweise in Gegenwart von Veresterungskatalysatoren, zweckmäßigerweise in einer Atmosphäre aus Inertgas, wie z.B. Stickstoff, Kohlenmonoxid, Helium, Argon u.a. in der Schmelze bei Temperaturen von 150 bis 250°C, vorzugsweise 180 bis 220°C, gegebenenfalls unter vermindertem Druck, bis zu der gewünschten Säurezahl, die vorzugsweise kleiner als 10, besonders bevorzugt kleiner als 2 ist, polykondensiert werden. Nach einer bevorzugten Ausführungsform wird als Veresterungsgemisch bei den oben genannten Temperaturen bis zu einer Säurezahl von 80 bis 30, vorzugsweise 40 bis 30, unter Normaldruck und anschließend unter einem Druck von kleiner als 500 mbar, vorzugsweise 50 bis 150 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, wie z.B. Benzol, Toluol, Xylol oder Chlorbenzol zur azeotropen Abdestillation des Kondensationswassers durchgeführt werden. Zur Herstellung der Polyesterpolyole werden die organischen Polycarbonsäuren und/oder -derivate und mehrwertigen Alkohole vorteilhafterweise im Molverhältnis von 1 :1 bis 1,8, vorzugsweise 1 :1,05 bis 1,2 polykondensiert.

Die erhaltenen Polyesterpolyole besitzen vorzugsweise eine Funktionalität von 2 bis 4, insbesondere von 2 bis 3, und ein zahlenmittleres Molekulargewicht von 480 bis 3000, vorzugsweise 1000 bis 3000 g/mol.

Als Polyesterole eignen sich ferner polymermodifizierte Polyesterole, vorzugsweise Pfropf-Polyesterole. Hierbei handelt es sich um ein sogenanntes Polymerpolyesterol, welches üblicherweise einen Gehalt an, bevorzugt thermoplastischen, Polymeren von 5 bis 60 Gew.-%, bevorzugt 10 bis 55 Gew.-%, besonders bevorzugt 15 bis 50 Gew.-% und insbesondere 20 bis 40 Gew.-%, aufweist. Diese Polymerpolyesterole sind beispielsweise in WO 05/098763 und EP-A-250 351 beschrieben und werden üblicherweise durch radikalische Polymerisation von geeigneten olefinischen Monomeren, beispielsweise Styrol, Acrylnitril, (Meth)Acrylaten, (Meth)Acrylsäure und/oder Acrylamid, in einem als Pfropfgrundlage dienenden Polyesterol hergestellt. Die Seitenketten entstehen im Allgemeinen durch Übertragung der Radikale von wachsenden Polymerketten auf Polyesterole oder Polyetherole. Das Polymer-Polyesterol enthält neben dem Pfropfcopolymerisaten überwiegend die Homopolymere der Olefine, dispergiert in unverändertem Polyesterol.

In einer bevorzugten Ausführungsform werden als Monomere Acrylnitril, Styrol, bevorzugt Acrylnitril und Styrol verwendet. Die Monomere werden gegebenenfalls in Gegenwart weiterer Monomere, eines Makromers, d.h. eines ungesättigten, radikalisch polymerisierbaren Polyols, eines Moderators und unter Einsatz eines Radikal-Initiators, meist Azo- oder Peroxidverbindungen, in einem Polyesterol oder Polyetherol als kontinuierlicher Phase polymerisiert. Dieses Verfahren ist beispielsweise in DE 111 394, US 3 304 273, US 3 383 351, US 3 523 093, DE 1 152 536 und DE 1 152 537 beschrieben.

Während der radikalischen Polymerisation werden die Makromere mit in die Copolymerkette eingebaut. Dadurch bilden sich Blockcopolymere mit einem Polyester- und einem Poly-acrylnitril-styrol-Block, welche in der Grenzfläche von kontinuierlicher Phase und dispergierter Phase als Phasenvermittler wirken und das Agglomerieren der Polymerpolyesterolpartikel unterdrücken. Der Anteil der Makromere beträgt üblicherweise 1 bis 20 Gew.-%, bezogen auf das Gesamtgewicht der zur Herstellung des Polymerpolyols eingesetzten Monomere.

Ist Polymerpolyol enthalten, liegt dies vorzugsweise zusammen mit weiteren Polyesterolen vor. Besonders bevorzugt ist der Anteil an Polymerpolyol größer als 5 Gew.-%, bezogen auf das Gesamtgewicht der Komponente (b). Die Polymerpolyesterole können beispielsweise, bezogen auf das Gesamtgewicht der Komponente (b), in einer Menge von 7 bis 90 Gew.-%, oder von 11 bis 80 Gew.-% enthalten sein.

Neben Polyesterolen (b) können auch weitere Polyole mit einem zahlenmittleren Molekulargewicht von größer 500 g/mol, beispielsweise Polyetherole, eingesetzt werden. Dabei beträgt aber der Anteil der weiteren Polyole vorzugsweise weniger als 40 Gew.-%, besonders bevorzugt weniger als 20 Gew.-%, ganz besonders bevorzugt weniger als 10 Gew.-% und insbesondere 0 Gew.-%, bezogen auf das Gesamtgewicht an Polyesterolen (b) und den weiteren Polyolen.

Ferner sind bei der Herstellung von Polyurethanschaumstoffformkörpem Treibmittel c) zugegen. Diese Treibmittel c) können Wasser enthalten. Als Treibmittel c) können neben Wasser noch zusätzlich allgemein bekannte chemisch und/oder physikalisch wirkende Verbindungen eingesetzt werden. Unter chemischen Treibmitteln versteht man Verbindungen, die durch Reaktion mit Isocyanat gasförmige Produkte bilden, wie beispielsweise Wasser oder Ameisensäure. Unter physikalischen Treibmitteln versteht man Verbindungen, die in den Einsatzstoffen der Polyurethan-Herstellung gelöst oder emulgiert sind und unter den Bedingungen der Polyurethanbildung verdampfen. Dabei handelt es sich beispielsweise um Kohlenwasserstoffe, halogenierte Kohlenwasserstoffe, und andere Verbindungen, wie zum Beispiel perfluorierte Alkane, wie Perfluorhexan, Fluorchlorkohlenwasserstoffe, und Ether, Ester, Ketone, Acetale oder Mischungen daraus, beispielsweise (cyclo)aliphatische Kohlenwasserstoffe mit 4 bis 8 Kohlenstoffatomen, oder Fluorkohlenwasserstoffe, wie Solkane^{®} 365 mfc der Firma Solvay Fluorides LLC. In einer bevorzugten Ausführungsform wird als Treibmittel eine Mischung enthaltend mindestens eines dieser Treibmittel und Wasser eingesetzt, insbesondere Wasser als alleiniges Treibmittel. Wird kein Wasser als Treibmittel eingesetzt, werden vorzugsweise ausschließlich physikalische Treibmittel verwendet.

Der Gehalt an Wasser beträgt in einer bevorzugten Ausführungsform von 0,1 bis 2 Gew.-%, bevorzugt 0,2 bis 1,5 Gew.-%, besonders bevorzugt 0,3 bis 1,2 Gew.-%, , bezogen auf das Gesamtgewicht der Komponenten a) bis h).

In einer weiteren bevorzugten Ausführungsform werden der Umsetzung der Komponenten a) bis h) als zusätzliches Treibmittel Mikrohohlkugeln, die physikalisches Treibmittel enthalten, zugegeben. Die Mikrohohlkugeln können auch im Gemisch mit den vorstehend genannten Treibmitteln eingesetzt werden.

Die Mikrohohlkugeln bestehen üblicherweise aus einer Hülle aus thermoplastischem Polymer und sind im Kern mit einer flüssigen, niedrig siedenden Substanz auf Basis von Alkanen gefüllt. Die Herstellung solcher Mikrohohlkugeln ist beispielsweise in US 3 615 972 beschrieben. Die Mikrohohlkugeln weisen im allgemeinen einen Durchmesser von 5 bis 50 µm auf. Beispiele für geeignete Mikrohohlkugeln sind unter dem Handelsnamen Expancell^{®} der Firma Akzo Nobel erhältlich.

Die Mikrohohlkugeln werden im allgemeinen in einer Menge von 0,5 bis 5 Gew.-%, bezogen auf das Gesamtgewicht der Komponenten b), c) und f) zugesetzt.

Als zellöffnende Additive (d) werden Verbindungen eingesetzt, ausgewählt aus der Gruppe, bestehend aus Homo- oder Copolymeren, vorzugsweise Copolymeren auf Basis von Ethylhexylacrylat, Polybutadien, Polyisobuten und Diorganosilikonen oder Mischungen aus zwei oder mehreren dieser zellöffnenden Additive.

Dabei sind Copolymere auf Basis von Ethylhexylacrylat und Hydroxyethylmethacrylat erhältlich durch Copolymerisation von Ethylhexylacrylat, Hydroxyethylmethacrylat und gegebenenfalls weiteren mit diesen Monomeren copolymerisierbaren Monomeren. Als weitere copolymerisierbare Monomere werden vorzugsweise Acrylate oder Methacrylate eingesetzt. Besonders bevorzugt werden weniger als 10 % und insbesondere keine weiteren copolymerisierbaren Monomere eingesetzt. Vorzugsweise weisen diese Copolymere ein gewichtsmittleren Molekulargewicht von 2000 bis 200.000 g/mol, besonders bevorzugt von 5000 bis 75000 g/mol auf. In einer besonderen Ausführungsform der Erfindung werden Homopolymere des Polyethylhexylacrylat verwendet.

Polyisobuten wird vorzugsweise flüssig eingesetzt. Dabei handelt es sich um Polyisobutylene mit einem zahlenmittleren Molekulargewicht von vorzugsweise 300 bis 3000 g/mol. Polyisobutylene sind bekannt und beispielsweise kommerziell unter dem Handelsnamen Oppanol^{®} oder Glisopal^{®} erhältlich. Polyisobuten wird üblicherweise durch kationische Polymerisation von 2-Methylpropen unter Verwendung von Lewissäuren, wie Bortrifluorid oder Aluminiumtrichlorid in Verbindung mit Wasser oder Alkoholen synthetisiert.

Polybutadiene werden durch Polymerisation von 1,3 Butadien mit Ziegler-Natta-Katalysatoren erhalten. Vorzugsweise werden dabei Homopolymere oder Copolymere, ausgehend von mindestens 80 mol-% Butadien verwendet. Dabei werden vorzugsweise Polybutadienöle eingesetzt. Diese sind Polybutadiene mit einem gewichtsmittleren Molekulargewicht von 300 bis 30000 g/mol, vorzugsweise 500 bis 15000 g/mol. Polybutadienöle sind bekannt und kommerziell erhältlich.

Diorganosilikone sind Silikonpolymere, wobei die über Sauerstoffatome verbundenen Siliziumatome vorzugsweise jeweils zwei Kohlenwasserstoffverbindungen, wie aromatische, zum Beispiel Phenylgruppen, cyclische oder lineare oder verzweigtkettige aliphatische Kohlenwasserstoffe, wie Ethyl- oder Methylgruppen, als organische Reste tragen. Diese Reste könne gleich oder verschieden sein, vorzugsweise handelt es sich dabei um unsubstituierte Kohlenwasserstoffe. Besonders bevorzugt handelt es sich zu mindestens 80 mol-% der Reste um aliphatische lineare oder verzweigtkettige Kohlenwasserstoffreste mit jeweils 1 bis 20, vorzugsweise 1 bis 10 und besonders bevorzugt 1 bis 4 Kohlenstoffatomen. Dabei weisen die erfindungsgemäßen Diorganosiloxane vorzugsweise ein gewichtsmittleres Molekulargewicht von 161 bis 100.000 g/mol, vorzugsweise 500 bis 10.000 g/mol auf. Besonders bevorzugt weisen diese Verbindungen einen Schaumdestabilisierenden Charakter auf und können als Entschäumer in organischen Mischungen eingesetzt werden. Solche Produkte sind beispielsweise unter dem Handelsnamen Worlée Add 373 N der Firma Worlée Chemie GmbH bekannt.

Der Anteil an zellöffnenden Additiven (d) beträgt vorzugsweise 0,2 bis 3,5 Gew.-%, besonders bevorzugt 0,5 bis 2 Gew.-%, jeweils bezogen auf das Gesamtgewicht der Komponenten (b) bis (h).

Als silikonbasierte Zellstabilisatoren (e) werden silikonbasierte Verbindungen eingesetzt, die die Oberflächenspannung der Polyesterole herabsetzen. Bei diesen Verbindungen handelt es sich um Verbindungen enthaltend einen Molekülteil mit Siliziumorganischen Bausteinen und einen Molekülteil mit Polyoxyalkyleneinheiten. Besonders bevorzugt werden als silikonbasierte Zellstabilisatoren (e) Polysiloxan-Polyoxyalkylen-Blockcopolymere mit einem Oxyethylenanteil von kleiner 75 Gew.-% bezogen auf den gesamten Anteil Polyoxyalkyleneinheiten eingesetzt. Vorzugsweise weisen diese Polyethylenoxyd- und/oder Polypropylenoxydeinheiten auf. Bevorzugt beträgt das Molekulargewicht der Polyoxyalkylen Seitenketten mindestens 1000 g/mol Seitenketten. Diese Verbindungen sind bekannt und beispielsweise beschrieben im "Kunststoffhandbuch, Band 7, Polyurethane", Carl Hanser Verlag, 3. Auflage 1993, Kapitel 3.4.4.2 und können beispielsweise hergestellt werden durch Umsetzung von Siloxan, beispielsweise Polydimethylsiloxan, mit Polyoxyalkylenen, insbesondere polyethylenoxyd, polypropylenoxyd oder Copolymeren aus Polyethylenoxyd und Polypropylenoxyd eingesetzt. Dabei können Polysiloxan-Polyoxyalkylen-Blockcopolymere erhalten werden, die die Oxyalkylenkette als Endgruppe oder als eine oder mehrere Seitenketten aufweist. Die silikonbasierten Zellstabilisatoren (e) können OH-Gruppen aufweisen, vorzugsweise sind diese aber frei von OH-Gruppen. Dies kann erreicht werden, indem als Starter zur Herstellung der Polyoxyalkylene einwertige Alkohole, wie Butanol, eingesetzt werden. Beispielsweise können als silikonbasierte Zellstabilisatoren bekannte Schaumstabilisatoren auf Basis von Silikonen eingesetzt werden, wie Niax Silicone L1501, L 1505, L1540, L 1593, L 1602 oder L 1609 der Monentive; Dabco® DC 193, Dabco® DC 3041, Dabco® DC 3042, Dabco® DC 3043, Dabco® DC 5000, Dabco® DC 5169, Dabco® DC 2525, Dabco® DC 2584 oder Dabco® DC 5160 der Firma Air Products; Tegostab® BF 2270, Tegostab® BF 2370, Tegostab® BF 2470, Tegostab® B 8110, Tegostab® B 8225, Tegostab® B 8255, Tegostab® B 8317, Tegostab® B 8325, Tegostab® B 8905, Tegostab® B 8946 PF, Tegostab® B 8948, Tegostab® B 8950, Tegostab® B 8952, Tegostab® B 8960 oder Tegostab® B 8486 der Firma Goldschmidt. In einer besonders bevorzugten Aufführungsform der Erfindung wird eine Kombination eines silikonbasierten Zellstabilisators mit einen Additiv zur Verbesserung der Scherstabilität verwendet. Solche Scherstabilisatoren sind bekannt, beispielsweise unter dem Handelsnamen Niax Silicone L 1540 der Firma Monentive.

Dabei beträgt der Anteil des silikonbasierten Zellstabilisator vorzugsweise 0,1 bis 4 Gew.-%, besonders bevorzugt 0,2 bis 3 Gew.-% und insbesondere 0,5 bis 2,5 Gew.-%, jeweils bezogen auf das Gesamtgewicht der Komponenten (b) bis (h).

Als Kettenverlängerungsmittel und/oder Vernetzungsmittel f) werden Substanzen mit einem Molekulargewicht von vorzugsweise kleiner 450 g/mol, besonders bevorzugt von 60 bis 400 g/mol eingesetzt, wobei Kettenverlängerer 2 gegenüber Isocyanaten reaktive Wasserstoffatome und Vernetzungsmittel 3 gegenüber Isocyanat reaktive Wasserstoffatome aufweisen. Diese können bevorzugt einzeln oder in Form von Mischungen eingesetzt werden. Vorzugsweise werden Diole und/oder Triole mit Molekulargewichten kleiner als 400, besonders bevorzugt von 60 bis 300 und insbesondere 60 bis 150 eingesetzt. In Betracht kommen beispielsweise aliphatische, cycloaliphatische und/oder araliphatische Diole mit 2 bis 14, vorzugsweise 2 bis 10 Kohlenstoffatomen, wie Ethylenglykol, 1,3-Propandiol, 1,10-Decandiol, 1,2-, 1,3-, 1,4-Dihydroxycyclohexan, Diethylenglykol, Dipropylenglykol und 1,4-Butandiol, 1,6-Hexandiol und Bis-(2-hydroxyethyl)-hydrochinon, Triole, wie 1,2,4-, 1,3,5-Trihydroxy-cyclohexan, Glycerin und Trimethylolpropan, und niedermolekulare hydroxylgruppenhaltige Polyalkylenoxide auf Basis Ethylen- und/oder 1,2-Propylenoxid und den vorgenannten Diolen und/oder Triolen als Startermoleküle. Besonders bevorzugt werden als Kettenverlängerer (f) Monoethylenglycol, 1,4-Butandiol, Diethylengylcol, Glycerin oder Mischungen davon eingesetzt.

Sofern Kettenverlängerungsmittel, Vernetzungsmittel oder Mischungen davon Anwendung finden, kommen diese zweckmäßigerweise in Mengen von 1 bis 60 Gew.-%, vorzugsweise 1,5 bis 50 Gew.-% und insbesondere 2 bis 40 Gew.-%, bezogen auf das Gewicht der Komponenten b) und f), zum Einsatz.

Als Katalysatoren g) zur Herstellung der Polyurethanschaumstoffe werden bevorzugt Verbindungen verwendet, welche die Reaktion der Polyesterole b) und gegebenenfalls Kettenverlängerungs- und Vernetzungsmittel f) mit den organischen, gegebenenfalls modifizierten Polyisocyanaten a) stark beschleunigen. Genannt seien beispielsweise Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N',N'-Tetramethylethylendiamin, N,N,N',N'-Tetramethyl-butandiamin, N,N,N',N'-Tetramethyl-hexandiamin, Pentamethyl-diethylentriamin, Tetramethyl-diaminoethylether, Bis-(dimethylaminopropyl)-harnstoff, Dimethylpiperazin, 1,2-Dimethylimidazol, 1-Aza-bicyclo-(3,3,0)-octan und vorzugsweise 1,4-Diaza-bicyclo-(2,2,2)-octan und Alkanolaminverbindungen, wie Triethanolamin, Triisopropanolamin, N-Methyl- und N-Ethyl-diethanolamin und Dimethylethanolamin. Ebenso kommen in Betracht organische Metallverbindungen, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutyl-zinndiacetat, Dibutylzinndilaurat, Dibutylzinnmaleat und Dioctylzinn-diacetat, sowie Bismutcarboxylate, wie Bismut(III)-neodecanoat, Bismut-2-ethylhexanoat und Bismut-octanoat oder Mischungen davon. Die organischen Metallverbindungen können allein oder vorzugsweise in Kombination mit stark basischen Aminen eingesetzt werden. Handelt es sich bei der Komponente (b) um einen Ester, werden vorzugsweise ausschließlich Aminkatalysatoren eingesetzt.

Vorzugsweise verwendet werden 0,001 bis 5 Gew.-%, insbesondere 0,05 bis 2 Gew.-% Katalysator bzw. Katalysatorkombination, bezogen auf das Gewicht der Komponente b).

Der Reaktionsmischung zur Herstellung der Polyurethanschäume können gegebenenfalls auch noch Hilfsmittel und/oder Zusatzstoffe g) zugegeben werden. Genannt seien beispielsweise Trennmittel, Füllstoffe, Farbstoffe, Pigmente, Hydrolyseschutzmittel, geruchsabsorbierende Substanzen und fungistatische und/oder bakteriostatisch wirkende Substanzen.

Als geeignete Trennmittel seien beispielhaft genannt: Umsetzungsprodukte von Fettsäureestern mit Polyisocyanaten, Salze aus Aminogruppen enthaltenden Polysiloxanen und Fettsäuren, Salze aus gesättigten oder ungesättigten (cyclo)aliphatischen Carbonsäuren mit mindestens 8 C-Atomen und tertiären Aminen sowie insbesondere innere Trennmittel, wie Carbonsäureester und/oder -amide, hergestellt durch Veresterung oder Amidierung einer Mischung aus Montansäure und mindestens einer aliphatischen Carbonsäure mit mindestens 10 C-Atomen mit mindestens difunktionellen Alkanolaminen, Polyolen und/oder Polyaminen mit Molekulargewichten von 60 bis 400 g/mol, wie beispielsweise in EP 153 639 offenbart, Gemischen aus organischen Aminen, Metallsalzen der Stearinsäure und organischen Mono- und/oder Dicarbonsäuren oder deren Anhydride, wie beispielsweise in DE-A-3 607 447 offenbart, oder Gemischen aus einer Iminoverbindung, dem Metallsalz einer Carbonsäure und gegebenenfalls einer Carbonsäure, wie beispielsweise in US 4 764 537 offenbart. Vorzugsweise enthalten erfindungsgemäße Reaktionsmischungen keine weiteren Trennmittel.

Als Füllstoffe, insbesondere verstärkend wirkende Füllstoffe, sind die an sich bekannten, üblichen organischen und anorganischen Füllstoffe, Verstärkungsmittel, Beschwerungsmittel, Beschichtungsmittel usw. zu verstehen. Im einzelnen seien beispielhaft genannt: anorganische Füllstoffe, wie silikatische Mineralien, beispielsweise Schichtsilikate, wie Antigorit, Bentonit, Serpentin, Hornblenden, Amphibole, Chrisotil und Talkum, Metalloxide, wie Kaolin, Aluminiumoxide, Titanoxide, Zinkoxid und Eisenoxide, Metallsalze wie Kreide und Schwerspat, und anorganische Pigmente, wie Cadmiumsul-fid, Zinksulfid sowie Glas u.a. Vorzugsweise verwendet werden Kaolin (China Clay), Aluminiumsilikat und Copräzipitate aus Bariumsulfat und Aluminiumsilikat. Als organische Füllstoffe kommen beispielsweise in Betracht: Russ, Melamin, Kollophonium, Cyclopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestern und insbesondere Kohlenstofffasem.

Die anorganischen und organischen Füllstoffe können einzeln oder als Gemische verwendet werden und werden der Reaktionsmischung vorteilhafterweise in Mengen von 0,5 bis 50 Gew.-%, vorzugsweise 1 bis 40 Gew.-%, bezogen auf das Gewicht der Komponenten a) bis h), zugegeben.

In dem erfindungsgemäßen Verfahren werden die Ausgangskomponente a) bis h) in solchen Mengen miteinander vermischt, dass das Äquivalenzverhältnis von NCO-Gruppen der Polyisocyanate (a) zur Summe der reaktiven Wasserstoffatome der Komponenten (b), (c) und (d) 1 : 0,8 bis 1 : 1,25, vorzugsweise 1 : 0,9 bis 1 : 1,15 beträgt. Dabei entspricht ein Verhältnis von 1 : 1 einem Isocyanatindex von 100. Unter dem Isocyanatindex wird im Rahmen der vorliegenden Erfindung das stöchiometrische Verhältnis an Isocyanatgruppen zu mit Isocyanat reaktiven Gruppen, multipliziert mit 100, verstanden.

Gegenstand der vorliegenden Erfindung ist weiterhin ein Polyurethanformkörper, erhältlich nach dem erfindungsgemäßen Verfahren.

Die erfindungsgemäßen Polyurethanschaumstoffformkörper werden vorzugsweise nach dem one-shot-Verfahren mit Hilfe der Niederdruck- oder Hochdrucktechnik in geschlossenen, zweckmäßigerweise temperierten Formwerkzeugen hergestellt. Die Formwerkzeuge bestehen gewöhnlich aus Metall, z.B. Aluminium oder Stahl. Diese Verfahrensweisen werden beispielsweise beschrieben von Piechota und Röhr in "Integralschaumstoff', Carl-Hanser-Verlag, München, Wien, 1975, oder im "Kunststoffhandbuch", Band 7, Polyurethane, 3. Auflage, 1993, Kapitel 7.

Die Ausgangskomponenten a) bis h) werden dazu vorzugsweise bei einer Temperatur von 15 bis 90 °C, besonders bevorzugt von 25 bis 55 °C gemischt und die Reaktionsmischung gegebenenfalls unter erhöhtem Druck in das Formwerkzeug eingebracht. Die Vermischung kann mechanisch mittels eines Rührers oder einer Rührschnecke oder unter hohem Druck im sogenannten Gegenstrominjektionsverfahren durchgeführt werden. Die Formwerkzeugtemperatur beträgt zweckmäßigerweise 20 bis 160 °C, vorzugsweise 30 bis 120 °C, besonders bevorzugt 30 bis 60 °C. Dabei wird im Rahmen der Erfindung die Mischung der Komponenten a) bis h) bei Reaktionsumsätzen kleiner 90 %, bezogen auf die Isocyanatgruppen, als Reaktionsmischung bezeichnet.

Die Menge der in das Formwerkzeug eingebrachten Reaktionsmischung wird so bemessen, dass die erhaltenen Formkörper, insbesondere Integralschaumstoff eine Dichte von vorzugsweise 80 g/L bis 450 g/L bevorzugt von 150 g/L bis 400 g/L, besonders bevorzugt 180 g/L bis 350 g/L und insbesondere 200 bis 300 g/L aufweisen. Die Verdichtungsgrade zur Herstellung der erfindungsgemäßen Polyurethanintegral-schaumstoffe liegen im Bereich von 1,1 bis 8,5, vorzugsweise von 1,6 bis 7,0.

Die erfindungsgemäßen Polyurethanschaumstoffformkörper werden vorzugsweise als Schuhsohle und besonders bevorzugt als (Zwischen-)Sohle, zum Beispiel für Straßenschuhe, Sportschuhe, Sandalen und Stiefel eingesetzt. Insbesondere werden die erfindungsgemäßen Polyurethanintegralschaumstoffe als Zwischensohle für Sportschuhe oder als Sohlenmaterial hochhackige Damenschuhe eingesetzt. Dabei beträgt die Dicke der Sohle an der dicksten Stelle vorzugsweise mehr als 3 cm, besonders bevorzugt von mehr als 5 cm, wobei als Dicke der Sohle als Distanz von der dem Boden zugewandten Seite der Sohle in einer senkrechten Linie bis zur Sohlenoberseite verstanden. Weiter können erfindungsgemäße Polyurethanschaumstoffe im Innenbereich von Verkehrsmitteln beispielsweise in Autos als Lenkräder, Kopfstützen oder Schaltknöpfe oder als Stuhlarmlehnen verwendet. Weitere Verwendungsmöglichkeiten sind als Armlehne für Stühle oder als Motorradsitze.

Im Folgenden soll die Erfindung anhand von Beispielen verdeutlicht werden.

### Beispiele

### Folgende Verbindungen wurden eingesetzt:

- Polyol 1:: Polyesterol auf Basis von Adipinsäure, Monoethylengylcol, Butandiol und Trimethylolpropan und einer OH-Zahl von 44 mg KOH/g
- Polyol 2:: Polyesterol auf Basis von Adipinsäure, Monoethylengylcol, Butandiol mit einer OH-Zahl von 56 mg KOH/g
- Polyol 3:: Polymerpolyesterol Hoopol® PM 245 der Firma Synthesia mit einer OH-Zahl von 60 mg KOH/g
- Polyol 4:: Polyesterol auf Basis von Adipinsäure, Monoethylengylcol, Butandiol und Trimethylolpropan mit einer OH-Zahl von 48 mg KOH/g
- KV:: Monoethylenglycol
- Kat 1:: Lupragen® N 203 der BASF
- Kat 2:: Lupragen® N 206 der BASF
- Kat 3:: XD 103 von Air Products
- Kat 4:: Toyocat® NCT der Firma Tosoh
- Kat 5:: 1-Methylimidazol
- Kat 6:: Lupragen® N202 der BASF
- Expancel:: Expancel® 051 DU 40
- Z1:: Copolymer auf Basis von Ethylhexylacrylat und Hydroxyethylmethacrylat
- Z2:: Additiv auf Basis von Polybutadien mit einen gewichtsmittleren Molekulargewicht von 10.000 g/mol
- Z3:: Additiv auf Basis von Polyisobuten mit einem zahlenmittleren Molekulargewicht von Mn von 1000 g/mol
- Z4:: Worlée Add 373 N, Additiv auf Basis von Silikonen gelöst in Isoparafinen der Firma Worlée
- Stabi 1:: Stabilisator auf Basis von Polysiloxan-Polyoxyalkylene-Polymeren zur Verbesserung der Scherrstabilität des Schaums
- Stabi 2:: Stabilisator auf Basis Polysiloxan-Polyoxyalkylene-Polymeren
- Stabi 3:: Haftvermittler LK 221-E der Firma Air Products
- MES:: Lupranat® MES der Firma Elastogran GmbH (MMDI, Gehalt an 4,4'-MDI > 90%)
- MM103:: Lupranat® MM103 der Firma Elastogran GMBH (< 50 % Carbodiimidmodifiziertes MMDI in MMDI)
- DEO:: Diethyloxalat
- BC:: Benzylchlorid
- V65:: Azostarter der Firma Wako
- EHA:: Ethylhexylacrylat der Firma Aldrich
- HEMA:: Hydroxyethylmehtacrylat der Firma Aldrich
- MEK:: Methylethylketon der Firma Aldrich

### Prepolymerherstellung:

### Prepolymer 1:

In einen Prepolymerreaktor wurden 21,6 kg Lupranat MES mit 3,2 kg MM103 und 4*10⁴ kg Benzylchlorid vorgelegt und auf eine Temperatur von 60°C aufgeheizt. Nach erreichen der Temperatur wurde eine Mischung von 0,4 kg DEO, 10,8 kg Polyol 2 und 4 kg Polyol 4 langsam über einen Zeitraum von 30 Minuten zugeben. Nach der Zugabe wurde die Mischung auf 80°C erwärmt und 2 Stunden bei dieser Temperatur gerührt. Das so hergestellte Prepolymer hatte einen NCO-Gehalt von 18,9 %.

### Prepolymer 2:

In einen Prepolymerreaktor wurden 26,0 kg Lupranat MES mit 2,4 kg MM103 und 4*10⁴ kg Benzylchlorid vorgelegt und auf eine Temperatur von 60°C aufgeheizt. Nach erreichen der Temperatur wurden 11,6 kg Polyol 2 langsam über einen Zeitraum von 30 Minuten zugeben. Nach der Zugabe wurde die Mischung auf 80°C erwärmt und 2 Stunden bei dieser Temperatur gerührt. Das so hergestellte Prepolymer hatte einen NCO-Gehalt von 22,2 %.

### Synthese von Zellöffner Z1:

In einen 500 mL 4-Halskolben mit Thermometer, Blattrührer, Stickstoffeinleitung und Tropftrichter wurden 100 g Methylethylketon und 10 g einer Lösung 1 aus 99 g Ethylhexylacrylat, 1 g Hydroxyethylmethacrylat und 100 g Methylethylketon gemischt. Zu dieser Mischung wurde 1 mL einer Lösung 2, enthaltend 1,25g Wako® V65 und 50 mL Methylethylketon geben und die Mischung auf 65°C erwärmt. Nach erreichen von 65°C wurden über einen Zeitraum von 2 Stunden 90 g der Lösung 1 zudosiert, wobei nach einer Stunde und nach Ende der Dosierung der Lösung 1 der Mischung im 4-Halskolben je 1,5 mL der Lösung 2 zugeben wurden. Nach Ende der Dosierung wurde die Temperatur auf 70°C erhöht und eine Stunde bei 70°C gerührt. Als dann wurden der Mischung 40 mL der Lösung 2 zugeben, auf 75°C aufgeheizt und weitere 2 Stunden bei dieser Temperatur gerührt. Die viskose Mischung wurde mit 125 g Methylethylketon verdünnt, in einem Kolben überführt und anschließend im Rotationsverdampfer von Methylethylketon befreit. Das fertige Produkt ist eine bei Raumtemperatur hochviskose Masse, die bei 45°C gut händelbar ist.

### Vergleichsbeispiel 1-2 & erfindungsgemäßes Beispiele 1-5

| | **V1** | **V2** | **B1** | **B2** | **B3** | **B4** | **B5** |
|---|---|---|---|---|---|---|---|
| **Polyol 1** | 32,401 | | 32,201 | 32,134 | 32,23 4 | 31,812 | |
| **Polyol 2** | 41,659 | 82,30 | 41,359 | 41,315 | 41,328 | 40,902 | 82,05 |
| **Polyol 3** | 6,943 | 5,00 | 6,942 | 6,886 | 6,886 | 6,817 | 5,00 |
| **Polyol 4** | 4,629 | | 4,629 | 4,591 | 4,591 | 4,545 | |
| **KV** | 7,406 | 9,00 | 7,394 | 7,345 | 7,345 | 7,271 | 9,00 |
| **Kat 1** | 0,602 | | 0,602 | 0,597 | 0,597 | 0,591 | |
| **Kat 2** | 0,065 | | 0,065 | 0,064 | 0,064 | 0,064 | |
| **Kat 3** | 1,666 | | 1,666 | 1,653 | 1,653 | 1,636 | |
| **Kat 4** | | 0,90 | | | | | 0,90 |
| **Kat 5** | | 0,20 | | | | | 0,20 |
| **Kat 6** | | 0,40 | | | | | 0,40 |
| **Z1** | 0 | | 0,512 | 0 | 0 | 0 | |
| **Z2** | 0 | | 0 | 0,826 | | 0 | 0,25 |
| **Z3** | 0 | | 0 | | 0,713 | 0 | |
| **Z4** | 0 | | 0 | 0 | 0 | 1,636 | |
| **Stabi 1** | 0,417 | 0,50 | 0,417 | 0,413 | 0,413 | 0,409 | 0,50 |
| **Stabi 2** | 0,417 | 0,50 | 0,417 | 0,413 | 0,413 | 0,409 | 0,50 |
| **Stabi 3** | 0,278 | | 0,278 | 0,275 | 0,275 | 0,273 | |
| **Wasser** | 0,741 | 1,20 | 0,741 | 0,734 | 0,734 | 0,727 | 1,20 |
| **Expancel** | 2,777 | | 2,777 | 2,754 | 2,754 | 2,727 | |

Die Polyolmischungen der Beispiele V1, B1-B4 wurden entsprechend mit dem Prepolymeren 1 bei einem Isocyanatindex von 96 vermischt um einen Polyurethanschaum zu erhalten. Das Reaktivsystem wurde nach dem Vermischen in einen Becher oder zur Herstellung von Formkörpern in eine Plattenform der Abmessung 20*20*1 cm oder in eine Sohlenform überführt. Der Polyurethanschaum, der frei im Becher steigen konnte, wurde zur Bestimmung des freien Raumgewichts und als Indikator für Schrumpfverhalten herangezogen. Der erhaltene Polyurethanschaumstoffformkörper wurde für die Begutachtung der Oberflächengüte bzw. der Schaumstruktur heran gezogen.

Die Polyolmischungen der Beispiele V2 und B5 wurden entsprechend mit dem Prepolymeren 2 bei einem Isocyanatindex von 94 vermischt um einen Polyurethanschaum zu erhalten. Das Reaktivsystem wurde nach dem Vermischen in einen Becher oder zur Herstellung von Formkörpern in eine Plattenform der Abmessung 20*20*1 cm oder in eine Sohlenform überführt. Der Polyurethanschaum, der frei im Becher steigen konnte, wurde zur Bestimmung des freien Raumgewichts und als Indikator für Schrumpfverhalten herangezogen. Der erhaltene Polyurethanschaumstoffformkörper wurde für die Begutachtung der Oberflächengüte bzw. der Schaumstruktur heran gezogen.

In nachfolgender Tabelle sind die Ergebnisse aufgeführt:

| | V1 | V2 | B1 | B2 | B3 | B4 | B5 |
|---|---|---|---|---|---|---|---|
| Startzeit [s] | 10 | 12 | 10 | 9 | 11 | 11 | 12 |
| Steigzeit [s] | 70 | 50 | 68 | 73 | 75 | 80 | 47 |
| Freies Raumgewicht [g/L] | 152 | 122 | 150 | 154 | 158 | 167 | 125 |
| Formteildichte [g/L] | 325 | 259 | 325 | 325 | 325 | 325 | 252 |
| Schrumpf | -- | +/- | ++ | ++ | ++ | ++ | ++ |
| Schaumstruktur | ++ | ++ | ++ | + | ++ | ++ | ++ |

| | | | | | | | |
|---|---|---|---|---|---|---|---|
| ++ kein Schrumpf; + leichter Schrumpf; +/- mittlerer Schrumpf - starker Schrumpf; -- extremer Schrumpf ++ homogene feinzellige Schaumstruktur; + homogene Schaumstruktur; - grobzellige Schaumstruktur; -- inhomogene grobzellige Schaumstruktur | | | | | | | |

Wie aus dem Beispiel V1 und dem erfindungsgemäßen Beispielen B1-B5 ersichtlich, der Einsatz von Polyacrylaten, Polybutadien, Polyisobuten oder Silikonen zu dimensionstabilien Schäumen mit homogener Schaumstruktur.

## Patentansprüche

1. Verfahren zur Herstellung von Polyurethanschaumstoffformkörper mit einer Formteildichte von maximal 450 g/L bei dem man
a) organische Polyisocyanate mit
b) Polyesterole,
c) Treibmitteln,
d) zellöffenden Additiven, Ausgewählt aus der Gruppe, bestehend aus Homo oder Copolymeren auf Basis von Ethylhexylacrylat, Polybutadien, Polyisobuten und Diorganosilikonen oder Mischungen aus zwei oder mehreren dieser zellöffnenden Additive
e) Silikonbasierte Zellstabilisatoren enthaltend einen Molekülteil mit Siliziumorganischen Bausteinen und einen Molekülteil mit Polyoxyalkyleneinheiten und gegebenenfalls
f) Kettenverlängerungsmitteln und/oder Vernetzungsmitteln,
g) Katalysatoren und
h) sonstigen Hilfsmitteln und/oder Zusatzstoffen,
zu einer Reaktionsmischung vermischt, in eine Form gibt und zu einem Polyurethanschaumstoffformkörper ausreagieren lässt.

2. Verfahren nach Anspruch 1, **dadurch gekennzeichnet, dass** der silikonbasierte Zellstabilisator e) ein Polysiloxan-Polyoxyalkylen-Blockcopolymer mit einem Oxyethylenanteil von kleiner 75 Gew.-%, bezogen auf das Gesamtgewicht des Polyoxyalkylen im Blockpolymeren wobei das gewichtsmittlere Molekulargewicht der Polyoxyalkyelnblöcke größer als 1000 g/mol beträgt

3. Verfahren nach Anspruch 1 oder 2, **dadurch gekennzeichnet, dass** der Anteil der zellöffnenden Additive d), bezogen auf das Gesamtgewicht der Komponenten b) bis h), 0,2 bis 3,5 Gew.-% beträgt.

4. Verfahren nach einem der Ansprüche 1 bis 3, **dadurch gekennzeichnet, dass** der Anteil der Komponenten e), bezogen auf das Gesamtgewicht der Komponenten b) bis h), 0,2 bis 3 Gew.-% beträgt.

5. Verfahren nach einem der Ansprüche 1 bis 4, **dadurch gekennzeichnet, dass** neben den Polyesterolen (b) weniger als 10 Gew.-% weitere Polyole mit einem Molekulargewicht von größer 500 g/mol, bezogen auf das Gesamtgewicht an Polyesterolen (b) und weiteren Polyolen, eingesetzt werden.

6. Polyurethanformkörper, erhältlich nach einem Verfahren gemäß einem der Ansprüche 1 bis 5.

7. Verwendung eines Polyurethanformkörpers gemäß Anspruch 6 als Schuhsohle, Lenkrad, Sitz oder Armlehne.

## Claims

1. A process for producing polyurethane foam moldings where the density of the molding is at most 450 g/L, by mixing the following to give a reaction mixture:
a) organic polyisocyanates with
b) polyesterols,
c) blowing agents,
d) cell-opening additives selected from the group consisting of homo- or copolymers based on ethylhexyl acrylate, on polybutadiene, on polyisobutene, and on diorganosilicones, or a mixture of two or more of said cell-opening additives,
e) silicone-based cell stabilizers, comprising one molecular moiety having organosilicon units and one molecular moiety having polyoxyalkylene units, and optionally
f) chain extenders and/or crosslinking agents,
g) catalysts, and
h) other auxiliaries and/or additives,
and charging the materials to a mold, and permitting them to complete a reaction to give a polyurethane foam molding.

2. The process according to claim 1, wherein the silicone-based cell stabilizer e) is a polysiloxanepolyoxyalkylene block copolymer having less than 75% by weight of oxyethylene content, based on the total weight of the polyoxyalkylene in the block polymer, where the weight-average molar mass of the polyoxyalkylene blocks is greater than 1000 g/mol.

3. The process according to claim 1 or 2, wherein the content of the cell-opening additives d), based on the total weight of components b) to h), is from 0.2 to 3.5% by weight.

4. The process according to any of claims 1 to 3, wherein the content of the components e), based on the total weight of components b) to h), is from 0.2 to 3% by weight.

5. The process according to any of claims 1 to 4, wherein the amount used of further polyols having molar mass greater than 500 g/mol, alongside the polyesterols (b), based on the total weight of polyesterols (b) and of further polyols, is less than 10% by weight.

6. A polyurethane molding obtainable by a process according to any of claims 1 to 5.

7. The use of a polyurethane molding according to claim 6 as shoe sole, steering wheel, seat, or armrest.

## Revendications

1. Procédé pour la préparation de corps façonnés en mousse de polyuréthane présentant une densité de pièce façonnée d'au maximum 450 g/1, dans lequel on mélange
a) des polyisocyanates organiques avec
b) des polyesterols,
c) des agents gonflants,
d) des additifs d'ouverture de cellule, choisis dans le groupe constitué par les homopolymères ou les copolymères à base d'acrylate d'éthylhexyle, de polybutadiène, de polyisobutène et de diorganosilicones ou des mélanges de deux de ces additifs d'ouverture de cellule ou plus
e) des stabilisants de cellule à base de silicone, contenant une partie de molécule présentant des éléments organiques du silicium et une partie de molécule présentant des unités de polyoxyalkylène et, le cas échéant
f) des agents d'allongement de chaîne et/ou des réticulants,
g) des catalyseurs et
h) d'autres adjuvants et/ou additifs,
en un mélange réactionnel, on introduit le mélange dans un moule et on le laisse réagir en formant un corps façonné de mousse de polyuréthane.

2. Procédé selon la revendication 1, **caractérisé en ce que** le stabilisant de cellules à base de silicone e) est un copolymère à blocs de polysiloxanepolyoxyalkylène présentant une proportion d'oxyéthylène inférieure à 75% en poids, par rapport au poids total du polyoxyalkylène dans le copolymère à blocs, le poids moléculaire pondéral moyen des blocs de polyoxyalkylène étant supérieur à 1000 g/mole.

3. Procédé selon la revendication 1 ou 2, **caractérisé en ce que** la proportion des additifs d'ouverture de cellule d), par rapport au poids total des composants b) à h), est de 0,2 à 3,5% en poids.

4. Procédé selon l'une quelconque des revendications 1 à 3, **caractérisé en ce que** la proportion du composant e), par rapport au poids total des composants b) à h), est de 0,2 à 3% en poids.

5. Procédé selon l'une quelconque des revendications 1 à 4, **caractérisé en ce qu'**on utilise, outre les polyesterols (b), moins de 10% en poids d'autres polyols présentant un poids moléculaire supérieur à 500 g/mole, par rapport au poids total de polyesterols (b) et d'autres polyols.

6. Corps façonné de polyuréthane, pouvant être obtenu selon un procédé selon l'une quelconque des revendications 1 à 5.

7. Utilisation d'un corps façonné de polyuréthane selon la revendication 6 comme semelle de chaussure, volant, siège ou accoudoir.
